# EUROPEAN PATENT SPECIFICATION

(11) **EP 1 770 819 B1**
(45) Date of publication and mention of the grant of the patent: **31.05.2017**
(21) Application number: 06120488.9
(22) Date of filing: 12.09.2006
(51) Int. Cl.: H01M 10/54

(54) **System and method for treating lead containing devices**
Vorrichtung und Verfahren zur Behandlung von Bleienthaltenden Einheiten
Système et méthode pour le traitement de dispositifs contenants plomb

(30) Priority: 28.09.2005 IT MI20051806
(43) Date of publication of application: 04.04.2007
(73) Proprietor: Engitec Technologies, S.p.A., 20026 Novate Milanese MI (IT)
(72) Inventor: Pizzocri, Guido, 20025, Legnano (Milan) (IT)
(74) Representative: Bottero, Carlo

(56) References cited:
- EP-A2- 0 029 704
- DE-A1- 2 726 361
- DE-A1- 4 424 825
- GB-A- 1 293 974
- GB-A- 1 558 230
- GB-A- 2 078 138
- US-A- 3 985 650
- US-A- 4 042 177

## Description

The present invention refers to a treatment system and method of devices containing lead, such as in particular the lead accumulator.

The lead accumulator or lead-acid batteries, used on the vehicles and machines for industrial handling, are and will be irreplaceable for the years to come due to their reliability and low price.

Moreover, the recycling of lead batteries is very interesting, since it leads to the practically complete reuse of the constituent materials.

The danger of lead has always stimulated the research of technologies capable of leading to the design and construction of increasingly evolved facilities, both regarding the hygiene and the safety of the work environment and regarding the environmental protection and impact.

Most of the treatment and recovery facilities generally foresee a coarse grinding of the whole lead batteries and the subsequent separation of the ground product obtained in:
∘ A polymeric portion usually comprising PVC and/or polypropylene and the separators,
∘ A metallic portion comprising grids and poles,
∘ A portion containing the so-called "pastel", or rather a mixture containing lead and/or its derivatives such as, in particular, lead oxides and sulphides with fine particles of metallic lead plus other battery components pulverised by the mill.

Several of the current facilities have a first separation stage capable of obtaining high quality portions, i.e. containing small percentages of other portions.

This determines great advantages downstream of the recycling facility, especially in the case wherein these products must be sold in order to be recycled and/or transformed.

After the first separation, said facilities foresee the use of further separators for the portions obtained in the first stage, so to separate every single type of material.

One drawback of the current treatment facilities of the used batteries is that the various portions, in order to be separated, must be transferred inside the facility itself and fed to different separators, increasing the size, cost and moreover also the complexity of the recovery facility itself.

Another drawback is that in the case of use of separators for flotation (hydrostatic or hydrodynamic separators), these require a dense fluid for separating by means of flotation, for example, a polymeric portion from a metallic portion.

In particular, the dense fluid has a pre-established density and remains in the flotation separator.

The dense fluid involves the flotation of the portions or in any case the materials having a density less than that of the dense fluid itself.

Another drawback is that the density of the dense fluid used for the separation of the fractions cannot be modified.

Consequently, it may occur that the polymeric materials having higher specific weight or polymeric materials bound to small metallic pieces may not float, hence causing problems in the separation.

Object of the present invention is that of realising a treatment system of devices containing lead which avoids the use of an enduring dense fluid inside a hydrodynamic separator.

Another object is that of realising a treatment system of devices containing lead which is compact and easily transportable.

Still another object is that of being able to have a treatment system of devices containing lead which permits the treatment also of small quantities.

Further object is that of being able to have a treatment method of devices containing lead which is simple and economically advantageous.

These objects according to the present invention are achieved by realising a treatment system and a method of devices containing lead as set forth in claims 1 and 16.

Further characteristics of the invention are shown by the subsequent claims.

The characteristics and advantages of a treatment system and method of devices containing lead according to the present invention shall be more evident from the following exemplifying and not limiting description, referred to the attached schematic drawings in which:

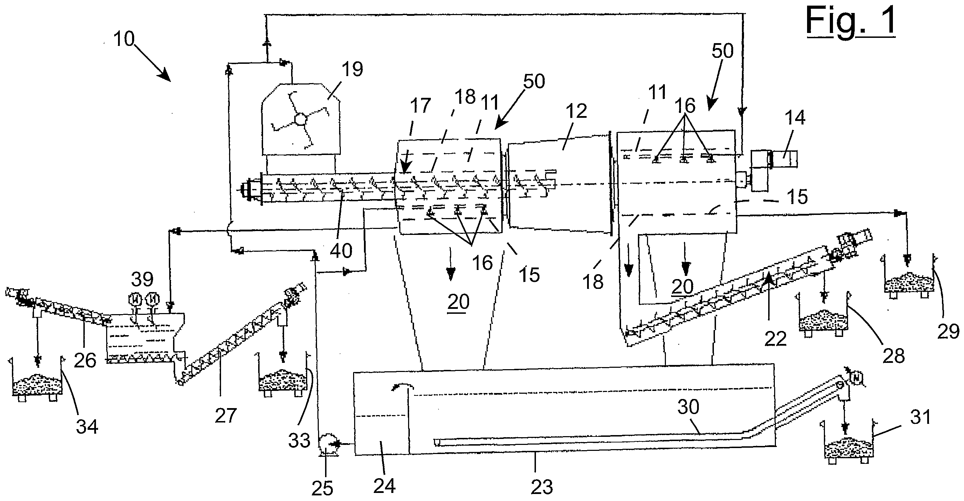

Figure 1 is a partially sectioned, right lateral elevation and schematic view of a preferred embodiment of a treatment system of devices containing lead according to the present invention.

With reference to the figure, a treatment system 10 of devices containing lead is shown, such as in particular lead accumulator or lead-acid batteries.

Said system 10 comprises at least one flotation separator 50 in turn comprising a dense fluid for the separation of a plurality of portions with different densities.

Said dense fluid comprises a mixture of lead and/or its derivatives in fine particles dispersed in water, or rather in other words said dense fluid comprises the pastel mixed with water.

In other words the dense fluid used in said at least one flotation separator is not a fluid with pre-established density, permanently residing in the at least one flotation separator itself, but is a dense fluid with variable density obtained incidentally from the grinding of the lead batteries.

Practically, said dense fluid is obtained by the pastel (lead and/or its derivatives such as, in particular, oxides and sulphides) mixed with water in variable proportions.

Said system 10 preferably comprises a pump 25 such to vary the quantity of water which is mixed with the ground batteries coming from a mill 19 with which said treatment and recovery system 10 is preferably equipped.

By varying the flow rate of said pump 25, it is therefore preferably possible to vary the density of said dense fluid (pastel and water) used for the separation of the portions by means of flotation.

In this manner, it is advantageously possible to separate materials of different densities by simply varying the density of said dense fluid by means of the variation of the water flow rate.

Said system 10 moreover comprises at least one washing device 16 for at least one solid portion. Said at least one washing device 16 is integrated with said at least one flotation separator 50.

Preferably, said at least one washing device 16 comprises a plurality of sprayers capable of washing the lead and/or its derivatives, or rather the pastel, of the solid portions separated from the mixture of devices containing ground lead (batteries).

Preferably, said at least one flotation separator 50 comprises a conduit 17 equipped with at least one upper and/or lower opening 18 for separating at least one solid portion of respectively lesser or greater density than said dense fluid.

In other words, it is possible to separate from said at least one upper opening 18 at least one polymeric portion, while from said at least one lower opening 18 it is possible to separate from the bottom of said conduit 17 at least one metallic portion.Said at least one flotation separator 50 comprises a cylindrical rotating screen 15 for filtering the pastel washed by the washing device 16. Said at least one rotating screen 15 is more external with respect to said conduit 17, and moreover preferably it is coaxially arranged with the conduit 17 itself.

Said screen 15 defines a jacket 11 with said conduit 17.

Said at least one polymeric portion overflows from said at least one upper opening 18 of said conduit 17 within said jacket 11.

Preferably, said at least one washing device 16 is arranged within said jacket 11 and in particular is fixed to the outer surface of said conduit 17.

In other words, according to the invention said at least one flotation separator 50 permits both the separation and the washing of the hydrodynamically-separated solid portions.

Preferably, said system 10 comprises a densifier 23 wherein the pastel and washing water are collected coming from said at least one flotation separator 50.

Preferably, said system 10 comprises at least one hopper 20 for conveying the pastel and washing water coming from said at least one flotation separator 50 within said densifier 23.

In the densifier 23, the pastel is decanted, while the limpid water overflows into a compartment 24 with which the densifier 23 is provided, from which it is fed by means of the pump 25 to the mill and to the plurality of sprayers.

Preferably, said pump 25 connects said compartment 24 of said densifier 23 with said mill 19 and with said at least one washing device 16.

The pastel at the bottom of said densifier 23 is instead extracted by means of a screw 30 and is collected in a container 31 with which said system 10 is provided.

Said system 10 preferably comprises a first and second flotation separator 50 serially connected between them by means of a container 12.

Preferably said system 10 comprises a screw 40 driven by a motor 14 which connects said mill 19 to said first flotation separator 50 and with said container 12.

This advantageously leads to a considerable simplification of the treatment and recovery system 10, and moreover causes a reduction of the consumption and maintenance operations of the system 10 itself.

Preferably, said mill 19 is hinged to a fixed structure of said system 10.

This in such a manner so to be able to pass from an operation position wherein it is vertically arranged to a transportation position wherein it is substantially horizontally tilted (or in any case extends vertically as little as possible).

Advantageously, in this manner said system 10 is easily positionable or in any case insertable within a transportation means.

Consequently it is also possible to transport said system 10 itself directly to the place of collection and/or storage of said lead batteries, so to treat them without having to transport them.

According to another aspect of the present invention, a treatment method of a plurality of devices containing lead such as in particular lead accumulator is provided, said method comprises a step of a) grinding said plurality of whole lead-containing devices, preferably in a coarse manner, obtaining a ground substance.

Said step a) comprises a step b) of adding water during the grinding, producing a dense fluid containing a plurality of solid portions.Said method comprises a step of c) separating by means of flotation from said dense fluid at least one polymeric portion.

Typically, said devices containing lead are lead batteries.

Conveniently, said method comprises the step of d) washing said polymeric portion by means of water.The method comprises the step of e) filtering or screening said at least one polymeric portion by separating it from the pastel. Said step e) occurs simultaneously with said d), i.e. said method foresees simultaneously washing and filtering said polymeric portion by means of water, separating it from the pastel. Said step c) comprises the step of f) varying the density of said dense fluid by means of variation of the flow rate of the water added during the step b).

This advantageously permits separating one or more portions having a density less than said dense fluid.

In accordance with a preferred embodiment, said method foresees repeating said step c) so to obtain a desired level of solid portion separation with respect to the remainder.

In accordance with a preferred embodiment, said method comprises a step of g) mechanically separating a small polymeric portion, which remains bound to a metallic portion immersed within said dense fluid.

In accordance with a preferred embodiment, said method comprises a step of h) mechanically separating, preferably by means of a screen, lead and/or its derivatives from the plastic portion separated in step b).

In accordance with a preferred embodiment, said step c) comprises a step of i) varying the quantity of water present within said dense fluid.

In detail, the batteries, collected and stocked full and/or empty, are fed to the mill 19 of the system 10 together with water fed by means of the pump 25.

In the mill 19 the batteries are ground and the resulting dispersion is sent by means of the screw 40 into the first flotation separator 50 and into a container 12.

In the first flotation separator 50 and in the container 12 there is the formation of a dense fluid, or rather a dispersion of pastel in water, whose density can be regulated in relation to the quantity of water fed, which leads to the separation of the polymeric part (polypropylene, PVC, separators, ...), which floats, from the metallic part (grids and poles) which sinks to the bottom.

The polymeric part overflows from a conduit 15, holed on its upper part, through a jacket 11; on a rotating screen 15 outside said jacket 11 the separation occurs of the pastel, of the plastic portion by means of washing operated by the sprayers 16, up to the nearly complete removal of the pastel adhering to the polymeric portion itself.

The pastel then passes through a hopper 20 until it reaches the densifier 23.

The cleaned plastics are discharged into the container 39, containing water, where the PVC and the separators go to the bottom and are extracted from a screw 27 and sent to a stocking container 33, while the polypropylene, which floats, is extracted by an additional screw 26 and is sent to a further stocking container 34.

Returning to the container 12, the metallic portion (grids and poles) by means of an extractor fed into the second flotation separator 50.

The metallic portion falls to the bottom of said conduit 17 of the second flotation separator 50, from where, through said at least one lower opening 18, a screw 22 collects it and brings it to a stocking container 28, while the polymeric portions, pushed by the water, pass onto a screen 15 where they are washed from the adhering pastel by means of the sprayers 16 and conveyed to a stocking container 29.

In the densifier 23, the pastel is decanted and the limpid, supernatant water is collected in a compartment 24 of the densifier 23, from which, then, it is fed to the mill 19 and to the sprayers 16 with the pump 25.

The densified pastel is then extracted from the bottom by means of a tapping chain 30, and sent to a stocking container 31.

Below several exemplifying examples are reported of the quantity and quality of the portions separated by means of a treatment system and method of devices containing lead according to the present invention.

### EXAMPLE 1

After having brought the facility into stationary conditions, 3500 kg of batteries are fed which have been ground in about one hour's time and fed to the separation.

The flow rate of the water pump was 5 m³/h.

At the various collection points, in these conditions, the following were recovered:
∘ 1705 kg of moist pastel
   - 2.12% plastic content
∘ 910 kg of metallic portion
   - 1.26% plastic content
∘ 220 kg of polypropylene
   - 870 mg/kg Pb content
∘ 205 kg of PVC and separators
   - 2.03% Pb content

### EXAMPLE 2

After having brought the facility into stationary conditions, 3500 kg of batteries are fed which have been ground in about one hour's time and fed to the separation.

The flow rate of the water pump was 7 m³/h.

At the various collection points, in these conditions, the following were recovered:
∘ 1718 kg of moist pastel
   - 2.31% plastic content
∘ 925 kg of metallic portion
   - 1.28% plastic content
∘ 200 kg of polypropylene
   - 920 mg/kg Pb content
∘ 185 kg of PVC and separators
   - 2.14% Pb content

Advantageously, this new system is also adapted for very small productions, and can be preassembled and transported to the place of collection of the batteries, ready for use, and moreover with reduced maintenance costs.

The present invention permits the same efficiency of separation of the best facilities for the recycling of the existing batteries and advantageously at the same time involves no other movement of material between one separation section and another.

The main separation, which occurs in the container 12, takes advantage of a dense means which form by chance and whose density in any case can be adjusted by regulating the quantity of water therein fed.

The separation is moreover driven by a motor and by a water supply pump with considerable energy savings.

The system 10 is compact and can be preassembled and delivered ready for use.

Since the system is moreover entirely closed, it permits an easy control and protection against the emissions (acid particles and mists).

It is thus seen that a treatment system and method of elements or devices containing lead according to the present invention realises the objects highlighted above.

The treatment system and method of elements or devices containing lead of the present invention as conceived are susceptible to numerous modifications and variants, all part of the same inventive concept.

Moreover, in practice the materials used, as well as their size and components can be of any type according the technical needs.

## Claims

1. System (10) of treatment of devices containing lead such as, in particular, the lead accumulator, said system (10) comprises
at least one flotation separator (50) in turn comprising a dense fluid for the separation of a plurality of portions having different densities, said dense fluid comprising a mixture of lead and/or its derivatives dispersed in water;
a pump (25) such to vary the quantity of water which is mixed with said devices containing lead;
at least one washing device (16) for at least one solid portion integrated with said at least one flotation separator (50);
said at least one flotation separator (50) comprising at least one rotating screen (15) for filtering the lead and/or its derivates washed from said at least one washing device (16);
said at least one rotating screen (15) being placed inside said at least one flotation separator (50) and externally with respect to said at least one washing device (16);
said at least one washing device (16) and said rotating screen (15) being capable of operating simultaneously.

2. System (10) according to claim 1, **characterised in that** said at least one washing device (16) comprises a plurality of sprayers capable of washing lead and/or its derivates from the solid portions.

3. System (10) according to any one of the claims from 1 to 2, **characterised in that** it comprises a densifier (23) wherein the lead and/or its derivatives and the washing water coming from said at least one flotation separator (50) are collected.

4. System (10) according to any one of the claims from 1 to 3, **characterised in that** it comprises at least one hopper (20) for conveying the lead and/or its derivatives and the washing water coming from said at least one flotation separator (50) preferably within said densifier (23).

5. System (10) according to claim 3 or 4, **characterised in that** said densifier (23) comprises a compartment (24) within which the limpid water reflows.

6. System (10) according to claim 5, **characterised in that** said pump (25) connects said compartment (24) of said densifier (23) with said mill (19) and with said washing device (16).

7. System (10) according to any one of the claims from 4 to 6, **characterised in that** it comprises a screw (30) and a container (31) respectively for extracting and collecting the pastel from said densifier (23).

8. System (10) according to any one of the claims from 1 to 7, **characterised in that** it comprises a first and a second flotation separator (50) connected in series with each other by means of a container (12).

9. System (10) according to claim 8, **characterised in that** it comprises a screw (40) driven by a motor (14) which connects said mill (19) with said first flotation separator (50) and with said container (12).

10. System (10) according to claim 9, **characterised in that** said mill (19) is hinged to a fixed structure of said system (10).

11. Treatment method of a plurality of devices containing lead such as, in particular, the lead accumulator, said method comprising
a step of a) grinding said plurality of whole devices containing lead, obtaining a ground substance, said step a) comprising a step of b) adding water during the grinding, determining a dense fluid containing a plurality of solid portions;
a step of c) separating by means of flotation of at least one polymeric portion from said dense fluid;
a step of d) washing said at least one polymeric portion by means of water;
a step of e) filtering or screening said at least one polymeric portion, separating it from lead and/or its derivatives, said step e) occurring at the same time as said step d); said step c) comprising a step of i) varying the quantity of water present within said dense fluid so as to vary the density of said dense fluid; said steps c), d) and e) being carried out in a system according to claim 1.

12. Method according to claim 11, **characterised in that** said density of said dense fluid is varied by means of variation of the flow rate of the water added during the step b).

13. Method according to any one of the claims from 11 to 12, **characterised in that** it repeats said step c) so to obtain a desired level of solid portion separation with respect to the remainder.

14. Method according to any one of the claims from 11 to 13, **characterised in that** it comprises a step of g) mechanically separating a small polymeric portion which remains bound to a metallic portion immersed within said dense fluid.

15. Method according to any one of the claims from 11 to 14, **characterised in that** it comprises a step of h) separating, by means of a screen, lead and/or its derivatives from the plastic portion separated in step b).

## Patentansprüche

1. Vorrichtung (10) zur Behandlung von Bleienthaltenden Einheiten wie insbesondere Bleiakkumulatoren, wobei die Vorrichtung (10) Folgendes umfasst:
wenigstens einen Flotationstrenner (50), der seinerseits ein dichtes Fluid für die Trennung von mehreren Anteilen unterschiedlicher Dichte umfasst, wobei das dichte Fluid eine Mischung aus Blei und/oder dessen Derivaten umfasst, die im Wasser dispergiert sind;
eine Pumpe (25), um die Menge des Wassers, das mit den Bleienthaltenden Einheiten gemischt wird, zu variieren;
wenigstens eine Waschvorrichtung (16) für wenigstens einen Festkörperanteil, die in dem wenigstens einen Flotationstrenner (50) integriert ist;
wenigstens einen Flotationstrenner (50), umfassend wenigstens ein Rotationssieb (15) zum Filtern des Bleis und/oder dessen Derivaten, die durch die wenigstens eine Waschvorrichtung (16) gewaschen werden;
wenigstens ein Rotationssieb (15), das im Inneren des wenigstens einen Flotationstrenners (50) und außerhalb mit Bezug auf die wenigstens eine Waschvorrichtung (16) angeordnet ist;
wobei die wenigstens eine Waschvorrichtung (16) und das Rotationssieb (15) in der Lage sind, gleichzeitig betrieben zu werden.

2. Vorrichtung (10) nach Anspruch 1, **dadurch gekennzeichnet, dass** die wenigstens eine Waschvorrichtung (16) mehrere Sprüher umfasst, die in der Lage sind, das Blei und/oder dessen Derivate aus den Festkörperanteilen zu waschen.

3. Vorrichtung (10) nach einem der Ansprüche 1 bis 2, **dadurch gekennzeichnet, dass** sie einen Verdichter (23) umfasst, in dem das Blei und/oder dessen Derivate und das Waschwasser, das aus dem wenigstens einen Flotationstrenner (50) austritt, gesammelt werden.

4. Vorrichtung (10) nach einem der Ansprüche 1 bis 3, **dadurch gekennzeichnet, dass** sie wenigstens einen Bunker (20) umfasst, um das Blei und/oder dessen Derivate und das aus dem wenigstens einen Flotationstrenner (50) austretende Wasser vorzugsweise in den Verdichter (23) zu fördern.

5. Vorrichtung (10) nach Anspruch 3 oder 4, **dadurch gekennzeichnet, dass** der Verdichter (23) eine Kammer (24) umfasst, in die das klare Wasser zurückfließt.

6. Vorrichtung (10) nach Anspruch 5, **dadurch gekennzeichnet, dass** die Pumpe (25) die Kammer (24) des Verdichters (23) mit der Mühle (19) und der Waschvorrichtung (16) verbindet.

7. Vorrichtung (10) nach einem der Ansprüche 4 bis 6, **dadurch gekennzeichnet, dass** sie eine Schnecke (30) und einen Behälter (31) jeweils zum Extrahieren und Sammeln des Breis aus dem Verdichter (23) umfasst.

8. Vorrichtung (10) nach einem der Ansprüche 1 bis 7, **dadurch gekennzeichnet, dass** sie einen ersten und einen zweiten Flotationstrenner (50) umfasst, die mittels eines Behälters (12) in Serie miteinander verbunden sind.

9. Vorrichtung (10) nach Anspruch 8, **dadurch gekennzeichnet, dass** sie eine Schnecke (40) umfasst, die von einem Motor (14) angetrieben wird, die die Mühle (19) mit dem ersten Flotationstrenner (50) und dem Behälter (12) verbindet.

10. Vorrichtung (10) nach Anspruch 9, **dadurch gekennzeichnet, dass** die Mühle (19) an einer feststehenden Struktur der Vorrichtung (10) angelenkt ist.

11. Verfahren zur Behandlung von mehreren Bleienthaltenden Einheiten wie insbesondere Bleiakkumulatoren, wobei das Verfahren Folgendes umfasst:
einen Schritt a) des Mahlens der mehreren ganzen, Bleienthaltenden Einheiten, Erhalten eines Mahlguts, wobei der Schritt a) einen Schritt b) des Hinzufügens von Wasser während des Mahlens umfasst, Bestimmen eines dichten Fluids, das mehrere Festkörperanteile enthält;
einen Schritt c) des Trennens durch Flotation wenigstens eines Polymeranteils von dem dichten Fluid;
einen Schritt d) des Waschens des wenigstens einen Polymeranteils mittels Wassers;
einen Schritt e) des Filterns oder Siebens des wenigstens einen Polymeranteils, Trennen desselben vom Blei und/oder von dessen Derivaten, wobei der Schritt e) zeitgleich mit Schritt d) erfolgt; wobei der Schritt c) einen Schritt i) zum Variieren der Menge von Wasser umfasst, das in dem dichten Fluid enthalten ist, um die Dichte des dichten Fluids zu variieren; wobei die Schritte c), d) und e) in einer Vorrichtung gemäß Anspruch 1 ausgeführt werden.

12. Verfahren nach Anspruch 11, **dadurch gekennzeichnet, dass** die Dichte des dichten Fluids durch Variieren des Durchsatzes des Wassers variiert wird, das im Schritt b) hinzugefügt wird.

13. Verfahren nach einem der Ansprüche 11 bis 12, **dadurch gekennzeichnet, dass** der Schritt c) wiederholt wird, um einen gewünschten Grad von Festkörpertrennung mit Bezug auf den Rest zu erhalten.

14. Verfahren nach einem der Ansprüche 11 bis 13, **dadurch gekennzeichnet, dass** es einen Schritt g) des mechanischen Trennens eines kleinen Polymeranteils umfasst, der an einen Metallanteil gebunden ist, der in dem dichten Fluid eingetaucht ist.

15. Verfahren nach einem der Ansprüche 11 bis 14, **dadurch gekennzeichnet, dass** es einen Schritt h) des Trennens, mittels einem Sieb, von Blei und/oder dessen Derivaten von dem in Schritt b) getrennten Kunststoffanteil umfasst.

## Revendications

1. Système (10) de traitement de dispositifs contenant du plomb tels que, en particulier, l'accumulateur au plomb, ledit système (10) comprenant :
au moins un séparateur par flottation (50) comprenant à son tour un fluide dense pour la séparation d'une pluralité de parties ayant des densités différentes, ledit fluide dense comprenant un mélange de plomb et/ou ses dérivés dispersés dans l'eau ;
une pompe (25) adaptée pour faire varier la quantité d'eau qui est mélangée avec lesdits dispositifs contenant du plomb ;
au moins un dispositif de lavage (16) pour au moins une partie solide intégrée avec ledit au moins un séparateur par flottation (50) ;
ledit au moins un séparateur par flottation (50) comprenant au moins un tamis rotatif (15) pour filtrer le plomb et/ou ses dérivés lavés par ledit au moins un dispositif de lavage (16) ;
ledit au moins un tamis rotatif (15) étant placé à l'intérieur dudit au moins un séparateur par flottation (50) et extérieurement par rapport audit au moins un dispositif de lavage (16) ;
ledit au moins un dispositif de lavage (16) et ledit tamis rotatif (15) étant capables de fonctionner simultanément.

2. Système (10) selon la revendication 1, **caractérisé en ce que** ledit au moins un dispositif de lavage (16) comprend une pluralité de pulvérisateurs adaptés pour laver le plomb et/ou ses dérivés à partir des parties solides.

3. Système (10) selon l'une quelconque des revendications 1 à 2, **caractérisé en ce qu'**il comprend un densificateur (23) dans lequel le plomb et/ou ses dérivés et l'eau de lavage provenant dudit au moins un séparateur par flottation (50) sont recueillis.

4. Système (10) selon l'une quelconque des revendications 1 à 3, **caractérisé en ce qu'**il comprend au moins une trémie (20) pour acheminer le plomb et/ou ses dérivés et l'eau de lavage provenant dudit au moins un séparateur par flottation (50) de préférence dans ledit densificateur (23).

5. Système (10) selon la revendication 3 ou 4, **caractérisé en ce que** ledit densificateur (23) comprend un compartiment (24) dans lequel l'eau limpide reflue.

6. Système (10) selon la revendication 5, **caractérisé en ce que** ladite pompe (25) relie ledit compartiment (24) dudit densificateur (23) avec ledit broyeur (19) et avec ledit dispositif de lavage (16).

7. Système (10) selon l'une quelconque des revendications 4 à 6, **caractérisé en ce qu'**il comprend une vis (30) et un conteneur (31) respectivement pour extraire et recueillir la pâte provenant dudit densificateur (23).

8. Système (10) selon l'une quelconque des revendications 1 à 7, **caractérisé en ce qu'**il comprend un premier et un deuxième séparateur par flottation (50) connectés en série l'un avec l'autre au moyen d'un conteneur (12).

9. Système (10) selon la revendication 8, **caractérisé en ce qu'**il comprend une vis (40) entraînée par un moteur (14) qui relie ledit broyeur (19) avec ledit premier séparateur par flottation (50) et avec ledit conteneur (12).

10. Système (10) selon la revendication 9, **caractérisé en ce que** ledit broyeur (19) est articulé sur une structure fixe dudit système (10).

11. Procédé de traitement d'une pluralité de dispositifs contenant du plomb tels que, en particulier, l'accumulateur au plomb, ledit procédé comprenant :
une étape a) de broyage de ladite pluralité de dispositifs complets contenant du plomb, en obtenant une substance broyée, ladite étape a) comprenant une étape b) d'ajout d'eau durant le broyage, en produisant un fluide dense contenant une pluralité de parties solides ;
une étape c) de séparation par flottation d'au moins une partie polymérique par rapport audit fluide dense ;
une étape d) de lavage de ladite au moins une partie polymérique avec de l'eau ;
une étape e) de filtrage ou criblage de ladite au moins une partie polymérique, en la séparant du plomb et/ou de ses dérivés, ladite étape e) se produisant au même moment que ladite étape d) ; ladite étape c) comprenant une étape i) faisant varier la quantité d'eau présente dans ledit fluide dense de manière à faire varier la densité dudit fluide dense ; ladite étapes c), d) et e) étant exécutées dans un système selon la revendication 1.

12. Procédé selon la revendication 11, **caractérisé en ce que** ladite densité dudit fluide dense est changée au moyen d'une variation du débit de l'eau ajoutée durant l'étape b).

13. Procédé selon l'une quelconque des revendications 11 à 12, **caractérisé en ce qu'**il répète ladite étape c) de manière à obtenir un niveau désiré de séparation de la partie solide par rapport à la partie restante.

14. Procédé selon l'une quelconque des revendications 11 à 13, **caractérisé en ce qu'**il comprend une étape g) de séparation mécanique d'une petite partie polymérique qui reste liée à une partie métallique immergée dans ledit fluide dense.

15. Procédé selon l'une quelconque des revendications 11 à 14, **caractérisé en ce qu'**il comprend une étape h) de séparation, au moyen d'un tamis, du plomb et/ou de ses dérivés par rapport à la partie plastique séparée dans l'étape b).
